# EUROPÄISCHE PATENTANMELDUNG

(11) **EP 2 561 915 A1**
(43) Veröffentlichungstag der Anmeldung: **27.02.2013**
(21) Anmeldenummer: 12181025.3
(22) Anmeldetag: 20.08.2012
(51) Int. Cl.: B01D 46/10, B01D 46/00

(54) **Vorrichtung und Verfahren zur Desinfektion eines Filterelements**

(30) Priorität: 23.08.2011 DE 102011052913
(71) Anmelder: YIT Germany GmbH, 80992 München (DE)
(72) Erfinder: Martinsteg, Dipl.-Ing., Hans, 52159 Roetgen (DE); Hermsdorf, Dr. Klaus, 01324 Dresden (DE); Dr. Hausch, Peter, 01157 Dresden (DE); Gonschor, Markus, 51647 Gummersbach (DE)
(74) Vertreter: Bauer, Dirk

(57) **Zusammenfassung**

Die Erfindung offenbart eine Vorrichtung (1) zur Filtration eines mit Aerosolen beladenen Gasvolumenstroms, mit einem Filtergehäuse, das einen Rohgaseinlass (3) und einen Reingasauslass (24) aufweist und mit mindestens einem Filterelement (7) versehen ist, das einen Innenraum des Filtergehäuses in einen den Rohgaseinlass (3) aufweisenden Rohgasraum (4) und einen den Reingasauslass (24) aufweisenden Reingasraum (23) unterteilt, wobei ein Überströmen des Gasvolumenstroms von dem Rohgasraum (4) in den Reingasraum (23) lediglich durch ein in dem Filterelement (7) befindliches Filtermedium (8) hindurch möglich ist, wobei das Filterelement (7) einen Elementrahmen (11) besitzt, der einen Durchströmungsquerschnitt des Filterelements (7) umlaufend umgibt, wobei sich das Filterelement (7) mit einer ersten Stirnfläche (19) des Elementrahmens (11) unter Zwischenschaltung einer umlaufenden Dichtung (20) an einer senkrecht zu einer Durchströmungsrichtung ausgerichteten umlaufenden Stützfläche (21) des Filtergehäuses abstützt und an einer der ersten Stirnfläche (19) gegenüberliegenden zweiten Stirnfläche des Elementrahmens (11) mittels eines Spannrahmens (14) einer Spanneinrichtung gegen die Stützfläche (21) des Filtergehäuses pressbar ist, wobei die Stützfläche (21) des Filtergehäuses von einer Seitenfläche eines Hohlprofils (12) gebildet wird und die Seitenfläche eine umlaufende Prüfrille (22) aufweist, mittels derer eine Dichtigkeit der Dichtung (20) überprüfbar ist, wobei die Spanneinrichtung mindestens ein Spannorgan (13) zur Erzeugung einer Spannkraft aufweist.

Um die Vorrichtung speziell im Bereich der Dichtung (20) vollständig und zuverlässig desinfizieren zu können, wird vorgeschlagen, dass ein Abhebemittel angeordnet wird, mittels dessen die Dichtung (20) aktiv von der Stützfläche (21) abhebbar ist.

Die Erfindung betrifft ferner ein Verfahren, mittels dem die Dichtung (20) unter Verwendung der erfindungsgemäßen Vorrichtung (1) besonders einfach desinfizierbar ist.

## Beschreibung

### Einleitung

Die Erfindung betrifft eine Vorrichtung zur Filtration eines mit Aerosolen beladenen Gasvolumenstroms, mit einem Filtergehäuse, das einen Rohgaseinlass und einen Reingasauslass aufweist und mit mindestens einem Filterelement versehen ist, das einen Innenraum des Filtergehäuses in einen den Rohgaseinlass aufweisenden Rohgasraum und einen den Reingasauslass aufweisenden Reingasraum unterteilt, wobei ein Überströmen des Gasvolumenstroms von dem Rohgasraum in den Reingasraum lediglich durch ein in dem Filterelement befindliches Filtermedium hindurch möglich ist, wobei das Filterelement einen Elementrahmen besitzt, der einen Durchströmungsquerschnitt des Filterelements umlaufend umgibt, wobei sich das Filterelement mit einer ersten Stirnfläche des Elementrahmens unter Zwischenschaltung einer umlaufenden Dichtung an einer senkrecht zu einer Durchströmungsrichtung ausgerichteten umlaufenden Stützfläche des Filtergehäuses abstützt und an einer der ersten Stirnfläche gegenüberliegenden zweiten Stirnfläche des Elementrahmens mittels eines Spannrahmens einer Spanneinrichtung gegen die Stützfläche des Filtergehäuses pressbar ist, wobei die Stützfläche des Filtergehäuses von einer Seitenfläche eines Hohlprofils gebildet wird und die Seitenfläche eine umlaufende Prüfrille aufweist, mittels derer eine Dichtigkeit der Dichtung überprüfbar ist, wobei die Spanneinrichtung mindestens ein Spannorgan zur Erzeugung einer Spannkraft aufweist.

Darüber hinaus offenbart die Erfindung ein Verfahren zur Desinfektion einer Vorrichtung zur Filtration eines mit Aerosolen beladenen Gasvolumenstroms, umfassend die folgenden Schritte:
a) Ein Desinfektionsmittel wird in einen Rohgausraum eines Innenraums eines Filtergehäuses geleitet.
b) Das Desinfektionsmittel wird durch den Innenraum des Filtergehäuses geleitet, wobei das Filtergehäuse ein Filterelement aufweist, das den Innenraum des Filtergehäuses in den einen Rohgaseinlass aufweisenden Rohgasraum und einen einen Reingasauslass aufweisenden Reingasraum unterteilt, so dass ein Überströmen des Desinfektionsmittels von dem Rohgasraum in den Reingasraum lediglich durch ein in dem Filterelement befindliches Filtermedium hindurch möglich ist, wobei das Filtermedium mit dem Desinfektionsmittel in Kontakt gebracht wird, wobei das Filterelement einen Elementrahmen besitzt, der einen Durchströmungsquerschnitt umlaufend umgibt, wobei das Filterelement während des Filterbetriebs mit einer ersten Stirnfläche des Elementrahmens unter Zwischenschaltung einer umlaufenden Dichtung an einer senkrecht zu einer Durchströmungsrichtung ausgerichteten umlaufenden Stützfläche des Filtergehäuses abstützbar ist und an einer der ersten Stirnfläche gegenüberliegenden zweiten Stirnfläche des Elementrahmens mittels eines Spannrahmens einer Spanneinrichtung gegen die Stützfläche des Filtergehäuses pressbar ist, wobei die Stützfläche des Filtergehäuses von einer Seitenfläche eines Hohlprofils gebildet ist und die Seitenfläche eine Prüfrille aufweist, mittels derer während des Filterbetriebs eine Dichtigkeit der Dichtung überprüfbar ist, wobei eine Spannkraft der Spanneinrichtung mittels mindestens eines Spannorgans erzeugbar ist.
c) Das Desinfektionsmittel wird aus dem Innenraum des Filtergehäuses heraus geleitet.
d) Das Desinfektionsmittel wird außer in den Innenraum des Filtergehäuses auch in das Hohlprofil geleitet und über die Prüfrille in der Seitenfläche mit der Dichtung in Kontakt gebracht.

### Stand der Technik

Sowohl eine Vorrichtung als auch ein Verfahren der eingangs beschriebenen Art sind nach dem Stand der Technik - beispielsweise aus der DE 10 2008 026 068 B4 - allgemein bekannt.

Mittels des Pressens des Elementrahmens des mindestens einen Filterelements unter Zwischenschaltung der Dichtung gegen die Stützfläche ist sichergestellt, dass der Gasvolumenstrom unter allen Umständen stets das Filtermedium durchströmen muss, bevor er die Vorrichtung wieder verlässt. Die Anordnung der einzelnen Elemente der entsprechenden Vorrichtung in der genannten Schrift offenbart ferner weitere Dichtungen, die den zuvor beschriebenen Mechanismus sicherstellen.

Von zentraler Bedeutung im Zusammenhang mit einem Betrieb derartiger Vorrichtungen ist die Desinfektion derselben. Diese ist besonders wichtig, um die verbauten Filtermedien von gegebenenfalls darin angesiedelten Bakterien, Viren oder anderen Krankheitserregern zu befreien. Zu diesem Zweck ist es notwendig, eine jeweilige Vorrichtung - beispielsweise im Vorfeld eines Filterwechsels - vollständig zu desinfizieren und somit von schädlichen Organismen zu befreien. Nur auf diese Weise kann sichergestellt werden, dass bei einem Öffnen der Vorrichtung Schutzsack-Wechselmethode die Gefahr minimiert wird, dass bei einer Verletzung des Schutzsackes keine gesundheitliche oder sonstige Gefahr von dem Filterelement oder dem Rohgasraum ausgehen. Letzteres gilt besonders für Anwendungsfälle eingangs beschriebener Vorrichtungen in biologischen oder medizinischen Laboratorien oder ähnlichem, in denen mit gesundheitsschädlichen Mikroorganismen beispielsweise geforscht oder anderweitig experimentiert wird.

Bei beispielsweise gemäß der vorgenannten Druckschrift ausgeführten Vorrichtungen hat sich in der Anwendung jedoch gezeigt, dass eine 100%ige Desinfektion der gesamten Vorrichtung nicht immer garantiert werden kann. Als im Besonderen problematisch hat sich die zuverlässige Desinfektion der Dichtung ergeben, welche während des Filterbetriebs mittels des Spannorgans gegen die Stützfläche gepresst ist. Si ist nach durchgeführten Desinfektionszyklen festgestellt worden, dass eine vollständige Dekontamination der Dichtung nicht erreicht wird.

### Aufgabe

Der vorliegenden Erfindung liegt daher die Aufgabe zugrunde, sowohl eine Vorrichtung als auch ein Verfahren der eingangs beschriebenen Art dahingehend weiterzuentwickeln, dass die Vorrichtung speziell im Bereich der Dichtung vollständig und zuverlässig desinfiziert wird.

### Lösung

Die zugrunde liegende Aufgabe wird basierend auf einer Vorrichtung der eingangs beschriebenen Art erfindungsgemäß durch ein Abhebemittel, mittels dessen die Dichtung aktiv von der Stützfläche abhebbar ist, gelöst.

Als ein vorherrschendes Problem im Zusammenhang mit der Desinfektion der Dichtung konnte identifiziert werden, dass das Desinfektionsmittel nicht zuverlässig an sämtliche Stellen der Dichtung gelangt. Zwar können auch nach dem Stand der Technik frei von dem Innenraum her zugängliche Seitenbereiche der Dichtung gereinigt werden, doch ist ein vollständiges Beaufschlagen der gesamten Dichtung nicht ohne weiteres möglich. Mittels des beschriebenen Abhebemittels kann dieses Problem nun sehr einfach gelöst werden.

Das Abhebemittel ist in diesem Zusammenhang als eine Vorrichtung zu verstehen, mittels derer die Dichtung aktiv von ihrem Dichtsitz abgehoben werden kann. Der zugrunde liegende Gedanke liegt dabei in ebendieser aktiven Abhebung der Dichtung von ihrem Dichtsitz und ist von einer konkreten Ausführung des Abhebemittels unabhängig. Die von ihrem Dichtsitz abgehobene und für das Desinfektionsmittel frei von allen Seiten zugängliche Dichtung kann dadurch gleichzeitig mit der Desinfektion der restlichen Vorrichtung effektiv durchgeführt werden.

Das aktive Abheben der Dichtung mittels des Abhebemittels ist in diesem Zusammenhang eine ganz entscheidende Neuerung. Versuche, die Dichtung dadurch für das Desinfektionsmittel besser zugänglich zu machen, dass eine Spannkraft, mittels derer die Dichtung üblicherweise gegen die Stützfläche gepresst wird, zu lösen und die Dichtung zu entspannen, führten nicht zu dem gewünschten Erfolg. Dies hängt vorwiegend damit zusammen, dass die meist aus einem Elastomer hergestellte Dichtung aufgrund des während des Filterbetriebs erheblichen Anpressdrucks stark an der Stützfläche haftet und sich allein durch einen Wegfall des Anpressdrucks nicht eigenständig von ihrem Dichtsitz abhebt. Mittels des Abhebemittels allerdings, welches aktiv die Dichtung gewissermaßen von der Stützfläche "abzieht", kann dieser Effekt nun zuverlässig erreicht werden.

Infolge der frei liegenden Dichtung und der somit auch freiliegenden Prüfrille kann neben einer Einleitung des Desinfektionsmittels über den Rohgasraum auch eine Einleitung in das Hohlprofil sinnvoll durchgeführt werden, wobei das Desinfektionsmittel durch die frei liegende Prüfrille direkt und gezielt auf die Dichtung geleitet werden kann. Versuche haben zeigen können, dass eine derartige direkte und frontale Beschickung der Dichtung mit dem Desinfektionsmittel letztendlich zu einer vollständigen Dekontamination derselben führt und die Aufgabe folglich als gelöst angesehen werden kann.

Eine besonders vorteilhafte Ausgestaltung der erfindungsgemäßen Vorrichtung sieht vor, dass das Abhebemittel von dem Spannorgan gebildet wird. Dieses ist ohnehin als aktives Element in der Vorrichtung enthalten, wenngleich es bisher lediglich für die Erzeugung einer Druckkraft beziehungsweise Anpresskraft zuständig ist, mittels derer die Dichtung während des Filterbetriebs gegen die Stützfläche gepresst wird. Entsprechend ist nach dem Stand der Technik lediglich eine Druckkraft übertragende Verbindung zwischen dem Spannorgan und der Dichtung vorgesehen. Durch eine Erweiterung dieser Verbindung auf einen allgemeinen Kraftschluss, über den auch Zugkräfte auf die Dichtung aufgebracht werden können, ist das aktive Abheben besonders einfach durchführbar. Ein Beispiel einer konkreten Ausführung eines solchen Abhebemittels, das mittels eines L-Profils mit einem Rahmen des Filterelements eingreift, ist insbesondere den Ausführungsbeispielen entnehmbar.

Eine Ausbildung einer derartigen eine Zugkraft übertragenden Verbindung zwischen dem Spannorgan und der Dichtung kann besonders einfach über einen Formschluss erreicht werden. Während das Aufbringen der zuvor bereits beschriebenen Druckkraft auf die Dichtung nach dem Stand der Technik üblicherweise dadurch gelingt, dass eine Spanneinrichtung die mittels des Spannorgans erzeugte Kraft auf eine der Stützfläche der Vorrichtung abgewandte Rückseite der Dichtung leitet, indem ein an das Spannorgan starr angeschlossener Spannrahmen gegen einen Elementrahmen gefahren wird, kann ebendieses Prinzip auch für das aktive Abheben verwendet werden. Zu diesem Zweck ist lediglich eine Kraftaufbringung mittels des Spannorgans in die umgekehrte Richtung nötig und darüber hinaus ein Mechanismus, der einen Formschluss beispielsweise zwischen vorstehend erwähntem Spannrahmen und der Dichtung ebenfalls in beschriebene Richtung bereitstellt. Alternativ ist ebenso ein permanenter Kraftschluss zwischen dem Spannorgan beziehungsweise besagtem Spannrahmen und dem Elementrahmen denkbar, so dass andauernd sowohl Druck- als auch Zugkräfte zwischen beiden Vorrichtungselementen übertragen werden können. Als eine Möglichkeit sei beispielsweise eine Klebeverbindung oder eine Verschraubung genannt. Derartige Verbindungen können lediglich hinsichtlich eines Austauschs des Filterelements nachteilig sein, da sie aufwändig gelöst werden müssen.

Hinsichtlich einer Ausbildung eines Formschlusses ist beispielsweise denkbar, den Spannrahmen mit einem L-Profil zu versehen. Ein L-Profil ist als ein so genannter "Mitnehmer" besonders gut geeignet, da es mit seinem kürzeren Schenkel an ein korrespondierendes Profil des mitzunehmenden Elementrahmens "einhaken" kann und dieses "mitziehen" kann. Ebendieser Effekt ist in vorliegendem Fall erwünscht. Mittels eine L-Profils könnte also der Spannrahmen während einer Bewegung desselben in eine der Stützfläche der Dichtung abgewandte Richtung in ein korrespondierendes Profil des Elementrahmens eingreifen, die mittels des Spannorgans erzeugte Kraft auf die Dichtung übertragen und diese somit aktiv von ihrem Dichtsitz abheben.

Dies ist besonders einfach möglich, wenn der an die Dichtung angeschlossene Elementrahmen in jeweils an die Stirnflächen des Filterelements angrenzenden Bereichen eine Form eines C-Profils aufweist. Ein kurzer, horizontal orientierter Schenkel eines derartigen C-Profils des Elementrahmens eignet sich besonders gut für ein Eingreifen des kurzen, vertikal orientierten Schenl<el des L-Profils des Spannrahmens. Das bereits nach dem Stand der Technik bekannte übertragen der Druckkräfte von dem Spannrahmen auf den Elementrahmen kann indes weiterhin über plane Kontaktflächen beider Rahmen erfolgen, die miteinander in Eingriff gebracht werden.

Ein besonderer Vorteil des Herstellens einer Zugkraft übertragenden Verbindung mittels eines Formschlusses - beispielsweise mittels beschriebener Profilformen - besteht darin, dass der Anwender vollständig frei in der Wahl bei der Länge eines Verschiebebereichs ist, in dem sich der Spann- und der Elementrahmen relativ zueinander bewegen können und keinerlei Kräfte übertragen werden. Unter Verwendung beispielsweise einer Klebeverbindung ist dies nicht möglich. So ist beispielsweise denkbar, dass - ausgehend von einem angedrückten Zustand der Dichtung während des Filterbetriebs - das Spannorgan bis auf ein Kraftniveau Null gefahren wird, so dass die Kontaktflächen des Spann- und des Elementrahmens zwar aufeinander liegen aber keine Kraft mehr übertragen wird. Im Folgenden ist es nun möglich, den Spannrahmen mittels des Spannorgans von dem Elementrahmen weg zu bewegen, ohne dass eine Kraftübertragung zwischen beiden stattfindet. Erst ab einer gewissen zurückgelegten Wegstrecke des Spannrahmens relativ zum Elementrahmen hakt anschließend ein Teil des Spannrahmens an dem Elementrahmen ein, so dass sich beide Rahmen gemeinsam bewegen, jedoch nicht länger relativ zueinander. In der Folge wird die Dichtung von der Stützfläche gewissermaßen "abgezogen".

Unter Verwendung der vorgeschlagenen L- beziehungsweise C-Profile in den entsprechenden Bereich sowohl des Spann- als auch des Elementrahmens ist es von Vorteil, wenn die C-Profil Bereiche des Elementrahmens umlaufend ausgeführt sind, während das L-Profil des Spannrahmens an mindestens einer Seite, vorzugsweise an zwei Seiten des Elementrahmens angeordnet ist. Während ein umlaufendes C-Profil des Elementrahmens positiv auf dessen Steifigkeit Einfluss nimmt und somit sinnvoll ist, genügt eine Anordnung des L-Profils an dem Spannrahmen entlang einer Seite desselben. Besonders vorteilhaft ist allerdings eine Anordnung des L-Profils an zwei gegenüberliegenden Seiten, so dass es bei einem Einhaken von C-und L-Profil nicht zu einer einseitigen Zugbelastung des Elementrahmens und womöglich zu einer Schiefstellung kommt.

Die erfindungsgemäße Vorrichtung ist ferner vorzugsweise so ausgestaltet, dass das Spannorgan in einem passiven Zustand mittels eines Federelements in einer Schließstellung gehalten wird, in der das Filterelement gegen die Stützfläche des Filtergehäuses gepresst wird. Auf diese Weise ist sichergestellt, dass die Dichtung auch im Falle einer Störung - beispielsweise eines Stromausfalls - stets den Durchtritt von Rohgas von dem Rohgasraum in den Reingasraum ohne Durchströmen des mindestens einen Filtermediums verhindert. Eine Abhebestellung hingegen, in der die Dichtung aktiv mittels des Abhebemittels von der Stützfläche abgehoben ist, sollte vorzugsweise ausschließlich mittels einer Kraftaufbringung gegen besagte Feder möglich sein. Ein unbeabsichtigtes Abheben der Dichtung ist somit unterbunden und die Sicherheit einer derartigen Konstruktion gewährleistet.

Neben der Vorrichtung wird die erfindungsgemäße Aufgabe ferner durch eine Weiterentwicklung des eingangs erwähnten Verfahrens gelöst, wobei besagtes Verfahren durch den folgenden Schritt ergänzt wird:

### e) Die Dichtung wird aktiv von der Stützfläche abgehoben.

Dieser zusätzliche Verfahrensschritt ist mittels der offenbarten Vorrichtung besonders einfach durchführbar und verhilft zum Eintritt der bereits vorstehend genannten Vorteile.

Bei dem Verfahrensschritt des Abhebens der Dichtung sollte besonders darauf geachtet werden, dass die Dichtung vor einer Einleitung des Desinfektionsmittels in das Hohlprofil aktiv von der Stützfläche abgehoben wird. Auf diese Weise kann das Desinfektionsmittel direkt ab dem Beginn von dessen Einleitungsphase aus der Prüfrille austreten und die Dichtung vollständig umströmen. Ein Druckaufbau im Inneren des Hohlprofils, wie er entstehen würde, wenn das Desinfektionsmittel in das Hohlprofil eingeleitet würde, bevor die Dichtung abgehoben wäre, kann auf diese Weise vermieden werden.

### Ausführungsbeispiele

Die erfindungsgemäße Vorrichtung sowie das erfindungsgemäße Verfahren werden nachstehend anhand von Ausführungsbeispielen, die in den Figuren dargstellt sind, näher erläutert.

Es zeigt:
- Fig. 1:: eine erfindungsgemäße Vorrichtung während eines Filterbetriebs,
- Fig. 2:: wie Figur 1, jedoch während einer Desinfektion,
- Fig. 3:: ein Filterelement einer erfindungsgemäßen Vorrichtung während eines Filterbetriebs und
- Fig. 4:: wie Figur 3, jedoch während einer Desinfektion,
- Fig. 5a - 5c:: einen Einbau eines weiteren Filterelements in eine Vorrichtung und
- Fig. 6a - 6d:: wie Figuren 5a bis 5c, jedoch im Detail.

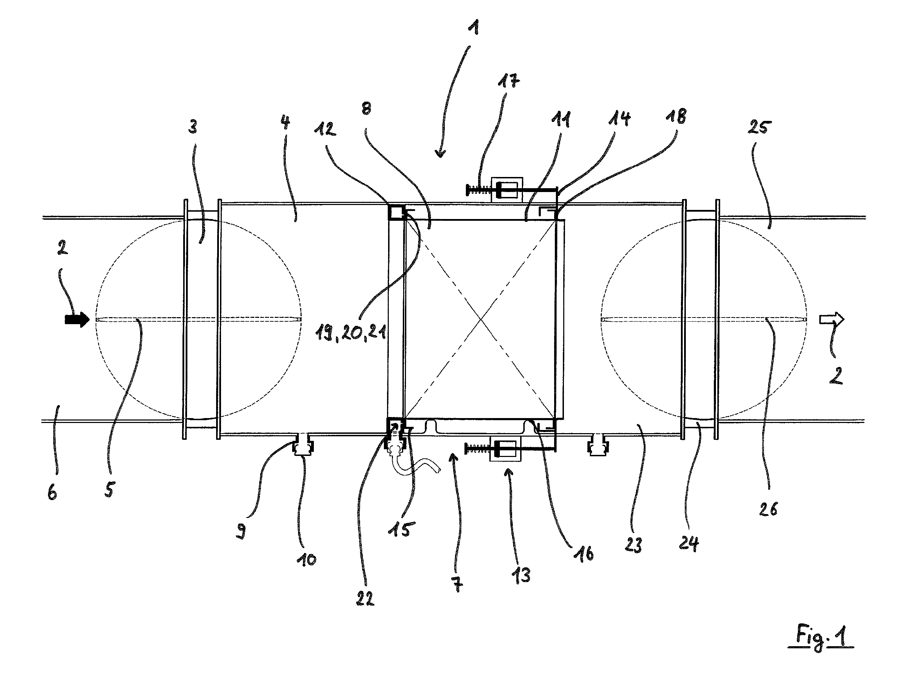

Gemäß einem ersten Ausführungsbeispiel, das in Figur 1 dargestellt ist, wird ein mit Aerosolen beladener Gasstrom mittels einer erfindungsgemäßen Vorrichtung 1 gefiltert. Eine Strömungsrichtung des Gasstroms ist in Figur 1 mittels Pfeilen 2 verdeutlicht. Bevor der aus einem Rohgas bestehende Gasstrom gefiltert wird, tritt er durch einen Rohgaseinlass 3 in einen Rohgasraum 4 der Vorrichtung 1 ein. Der Rohgasraum 4 ist dazu unter Zwischenschaltung einer Absperrklappe 5 an einen Anschlusskanal 6 angeschlossen. Von dem Rohgasraum 4 aus wird der Gasstrom durch ein Filterelement 7 geleitet, die mit einem Filtermedium 8 ausgestattet ist. Mit Ausnahme des Anschlusskanals 6 ist ein Durchfluss des Gasstroms durch das Filterelement 7 die einzige Möglichkeit, um aus dem Rohgasraum 4, der ansonsten vollständig dicht ausgeführt ist, auszuströmen. Zwar weist der Rohgasraum 4 an einer unteren Seite einen Anschlussstutzen 9 auf, dieser ist allerdings während des Filterbetriebs mit einem Blindstopfen 10 verschlossen. Auf eine Funktion des Anschlussstutzens 9 wird später gesondert eingegangen.

Das Filterelement 7 besteht neben dem Filtermedium 8 ferner aus einem Elementrahmen 11 und ist so angeordnet, dass es auf einer dem Rohgasraum 4 zugewandten Seite an ein Hohlprofil 12 und auf einer dem Rohgasraum 4 abgewandten Seite an einen Spannrahmen 14 anschließbar ist, wobei dieser Spannrahmen 14 mit einem Spannorgan 13 verbunden ist. Das Filtermedium 8 ist umlaufend von dem Elementrahmen 11 eingefasst. Dieser ist so ausgebildet, dass er sowohl in einem in Strömungsrichtung betrachtet vorderen Bereich als auch in einem in Strömungsrichtung betrachtet hinteren Bereich aus einem C-Profil 15 gefertigt ist, welches entsprechend dem Elementrahmen 11 ebenfalls umlaufend ist. In vertikaler Richtung ist das Filterelement 7 mittels zweier, aus einem Blech geformter Auflager 16 gelagert. Dabei wird eine Verschiebbarkeit des Filterelements 7 in eine horizontale Richtung nicht behindert. In einer in Figur 1 gezeigten Schließstellung ist das Spannorgan 13 deaktiviert, so dass ein Federelement 17, das an dem Spannorgan 13 angeordnet ist, dafür sorgt, dass der Spannrahmen 14 in eine zur Strömungsrichtung entgegen gesetzte Richtung gedrückt wird. Dabei steht er an einer Kontaktstelle 18 mit dem Elementrahmen 11 in formschlüssigem Kontakt, was dazu führt, dass ebenfalls der Elementrahmen 11 mitsamt dem darin befindlichen Filtermedium 8 in besagte Richtung gedrückt wird. An einer in Strömungsrichtung betrachtet ersten Stirnfläche 19 weist das Filterelement 7 eine umlaufende Dichtung 20 auf. Diese ist üblicherweise aus einem Elastomer gefertigt. Aufgrund der Federkraft wird die Dichtung 20 gegen eine fest stehende Stützfläche 21 des fest stehenden Hohlprofils 12 gedrückt und dichtet somit das Filterelement 7 derart ab, dass dem Gasstrom keine andere Möglichkeit bleibt, als das Filtermedium 8 zu durchqueren.

Um eine Undichtigkeit der Dichtung 20 ausschließen zu können, ist in dem Hohlprofil 12 eine so genannte Prüfrille 22 angeordnet. Dabei handelt es sich um einen Schlitz in einer seitlichen Wandung des Hohlprofils 12, wobei besagte Wandung von der Stützfläche 21 der Dichtung 20 gebildet ist. In einem angepressten Zustand liegt die Dichtung 20 entsprechend über der Prüfrille 22. Um eine Dichtigkeit der Dichtung 20 zu kontrollieren, kann - beispielsweise im Rahmen einer turnusmäßigen Dichtigkeitsprüfung - nun ein Überdruck in dem Hohlprofil 12 aufgebracht werden. Für den Fall, dass bei einem konstanten Aufrechterhalten dieses Überdrucks eine zulässige Leckrate überschritten wird, also festgestellt wird, dass der in das Hohlprofil 12 einzuleitende Volumenstrom, der notwendig ist, um den Überdruck konstant zu halten, einen definierten Grenzwert überschreitet, ist die hierfür verantwortliche Undichtigkeit zu beseitigen, wobei insbesondere die Dichtung 20 des Filterelements 7 überprüft werden sollte.

Nachdem der Gasstrom das Filterelement 7 durchströmt hat, gelangt er in einen Reingasraum 23, der mittels eines Reingasauslasses 24 an einen weiteren Anschlusskanal 25 angeschlossen ist. Ein Austritt des gereinigten Gasstroms aus dem Reingasraum 23 ist analog zum Rohgasraum 4 mittels einer Absperrklappe 26 absperrbar.

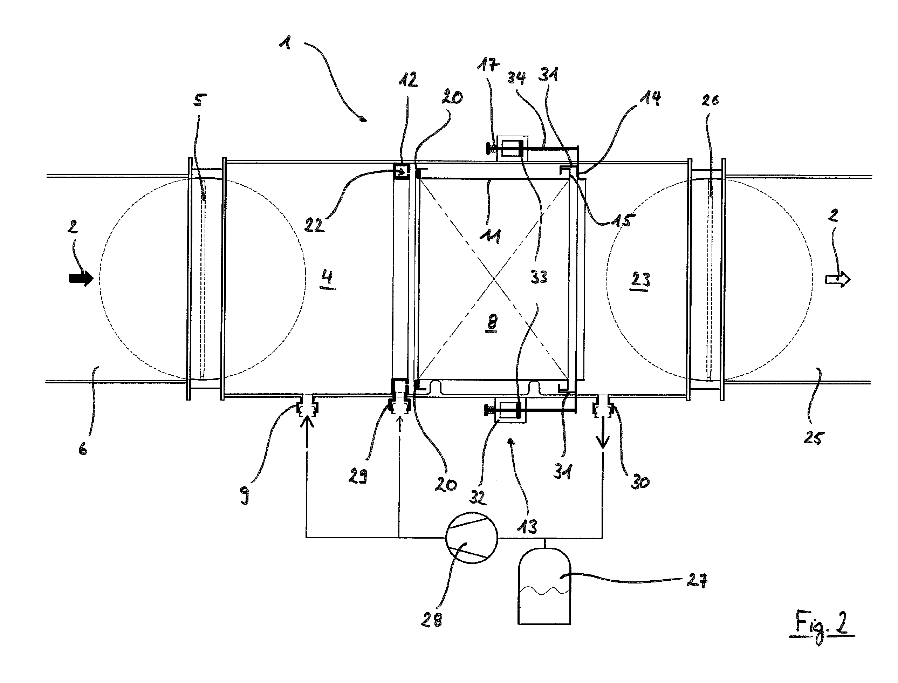

In Figur 2 ist die Vorrichtung 1 gemäß Figur 1 während einer Desinfektion dargestellt. Die Absperrklappen 5, 26 sind verschlossen, so dass weder Rohgas in den Rohgasraum 4 eintreten, noch Reingas aus dem Reingasraum 23 austreten könnte. Die Vorrichtung 1 ist also vollständig von den Anschlusskanälen 6, 25 abgeschottet. Dies ist wichtig, damit sichergestellt ist, dass kein Desinfektionsmittel die Vorrichtung 1 verlässt. Dieses Desinfektionsmittel ist in einem Speicher 27 gelagert und kann im Fall einer Desinfektion mittels einer Fördereinrichtung 28 der Vorrichtung 1 zugeführt werden. Dies geschieht im gezeigten Ausführungsbeispiel an zwei Stellen, dem Rohgasraum 4 und dem Hohlprofil 12. Ein Zugang zum Rohgasraum 4 erfolgt über den bereits vorstehend erwähnten Anschlussstutzen 9, der zu diesem Zweck nicht länger mittels des Blindstopfens 10 verschlossen ist, sondern vielmehr eine Zuleitung für das Desinfektionsmittel freigibt. Das Hohlprofil 12 verfügt über einen vergleichbaren Anschlussstutzen 29, über welchen - wie bereits erläutert - im Zuge einer Dichtigkeitsprüfung der Dichtung 20 ein Überdruck in dem Hohlprofil 12 erzeugt wird. In dem Reingasraum 23 ist ein weiterer Absaugstutzen 30 angeordnet, an dem bedingt durch die Fördereinrichtung 28 ein Unterdruck anliegt. Der mit dem Desinfektionsmittel beladene Gasstrom wird entsprechend vollständig aus dem Reingasraum 23 abgesaugt und gemäß einer schematisch in Figur 2 gezeigten Leitungsanordnung dem Reingasraum 4 beziehungsweise dem Hohlprofil 12 wieder zugeführt.

Entscheidend während der Desinfektion ist, dass die Dichtung 20 von der Prüfrille 22 abgehoben ist und diese somit freigibt. Erfindungsgemäß wird dies mittels des Spannorgans 13 beziehungsweise des Spannrahmens 14 erreicht. An den Spannrahmen 14 ist zu diesem Zweck an einer oberen und an einer unteren Seite ein L-Profil 31 angebracht. Diese L-Profile 31 sind derart ausgerichtet, dass es bei einem Verschieben des Spannrahmens 14 in die mittels der Pfeile 2 angedeutete Strömungsrichtung mit dem umlaufenden C-Profil 15 des Elementrahmens 11 eingreifen und den gesamten Elementrahmen 11 inklusive des darin befindlichen Filtermediums 8 und der daran angeordneten Dichtung 20 horizontal in Strömungsrichtung verschieben. Eine derartige Bewegung des Spannrahmens 14 steht im Gegensatz zu dem Federelement 17, dessen Kraft entsprechend entgegengewirkt werden muss. Dies wird mittels pneumatischer Druckzylinder 32 erreicht. Durch Aufbringen eines Luftdrucks innerhalb dieser Druckzylinder 32 werden jeweilige darin angeordnete Kolben 33 verschoben, wobei diese Kolben 33 mittels einer Kolbenstange 34 an den Spannrahmen 14 angeschlossen sind. Über diese Konstruktion wird gleichermaßen eine Druckkraft des Federelements 17 während des Filterbetriebs, wie auch eine Druckkraft des Druckzylinders 32 während der Desinfektion auf den Spannrahmen 14 übertragen.

Erfindungsgemäß kann nun während der Desinfektion das Desinfektionsmittel aus dem Hohlprofil 12 ausströmen und dabei zielgerichtet und konzentriert auf die Dichtung 20 aufgebracht werden. Diese wird entsprechend zuverlässig und umfassend desinfiziert, wie es nach dem Stand der Technik bisher nicht möglich war.

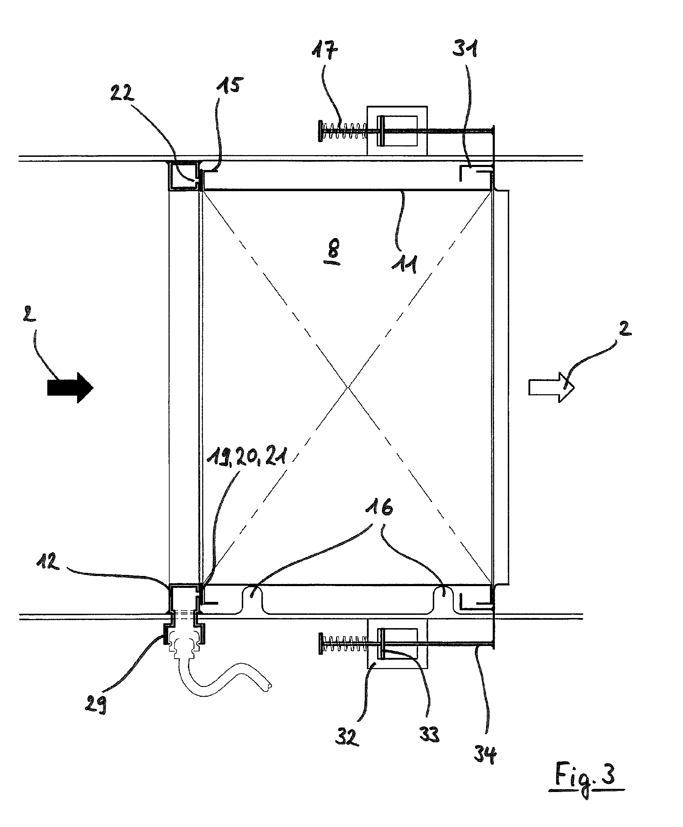

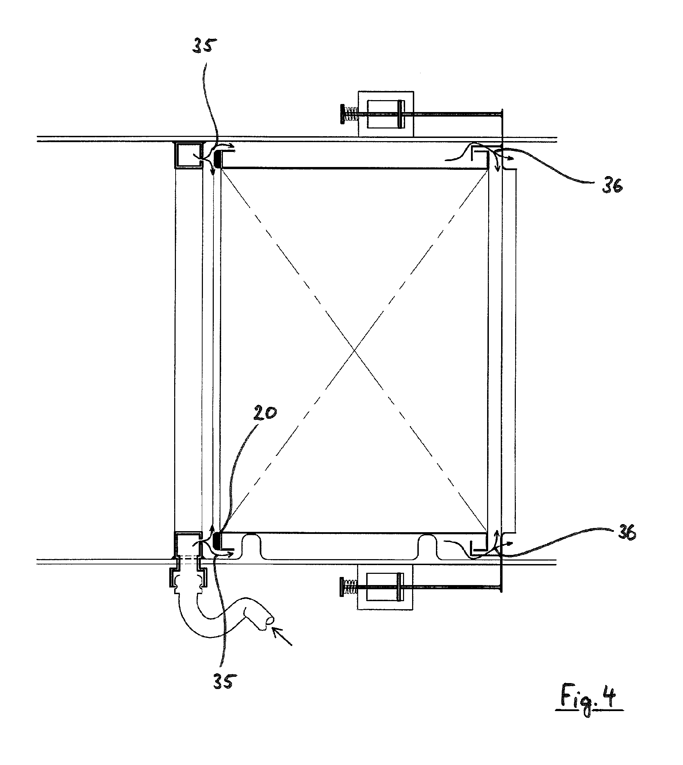

Aus den Figuren 3 und 4 ist das vorstehend erläuterte Ausführungsbeispiel mit einem Fokus auf das Filterelement 7 nochmals sowohl während des Filterbetriebs (Figur 3) als auch während der Desinfektion (Figur 4) abgebildet. Speziell aus Figur 4 geht anhand darin skizzierter Pfeile 35 und 36 noch einmal eine Strömungsrichtung des aus der Prüfrille 22 ausströmenden Desinfektionsmittels hervor. Ebenfalls wird noch einmal deutlich, dass während der Desinfektion das Federelement 17 gestaucht ist und der Kolben 33 innerhalb des Kolbendruckzylinders in Strömungsrichtung des Gasstroms verschoben ist.

Nach Abschluss des Desinfektionsvorgangs kann das zu ersetzende Filterelement durch eine nicht dargestellte Wechselöffnung in dem Vorrichtungsgehäuse mit Hilfe der Schutzsack-Wechselmethode entnommen und durch ein neues Filterelement ersetzt werden.

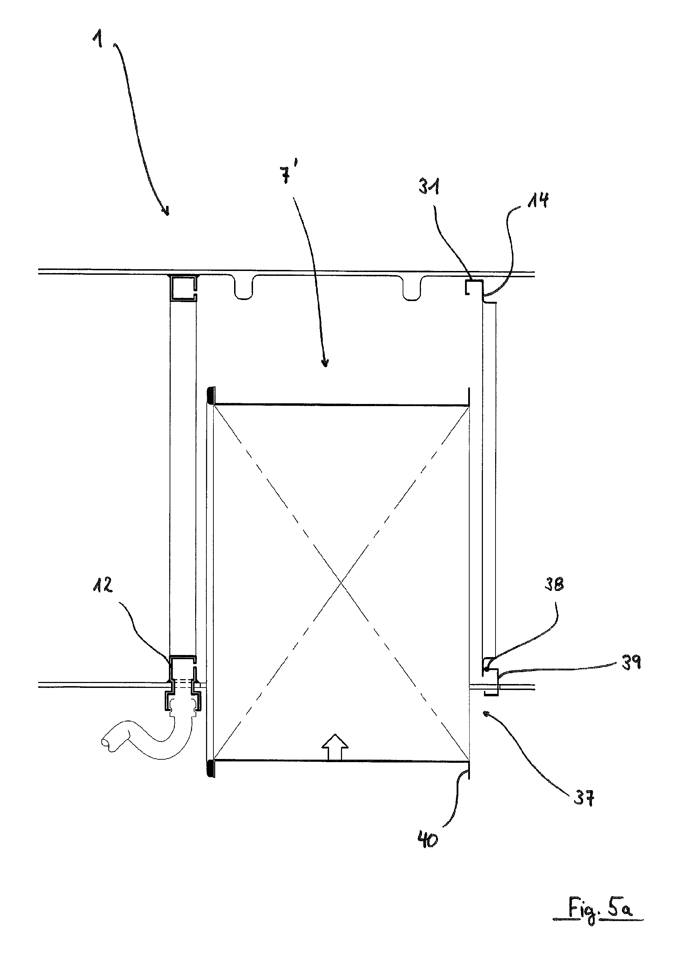

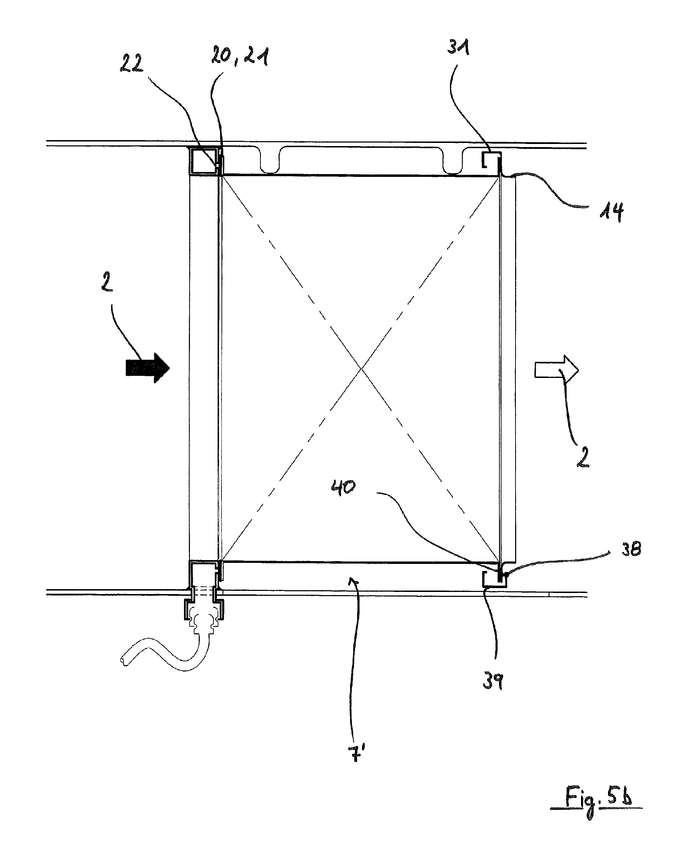

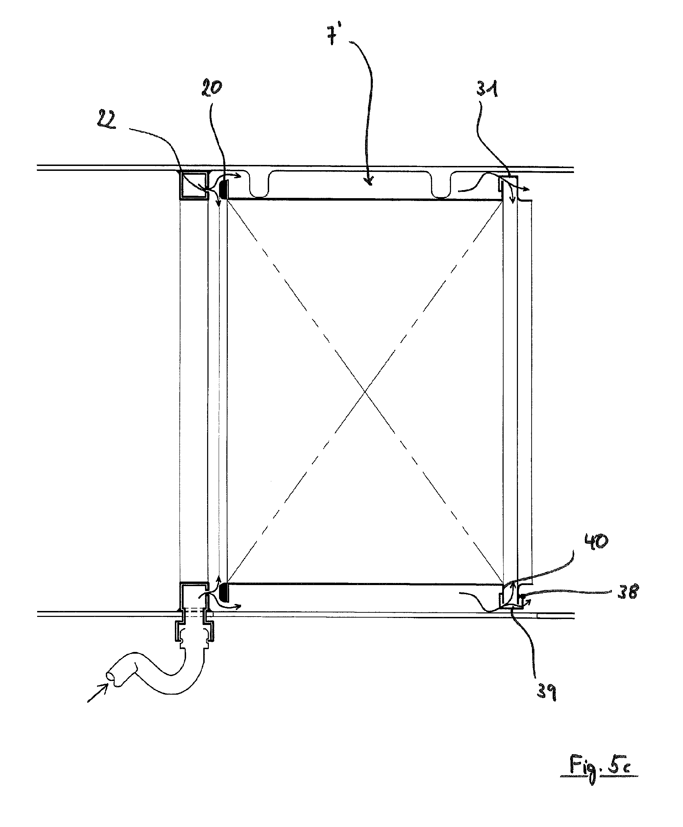

In den Figuren 5a bis 5c ist eine weitere Ausführungsform einer erfindungsgemäße Vorrichtung abgebildet, wobei ein Filterelement 7' zum Einsatz kommt, welches sich von dem bisher gezeigten Filterelement 7 unterscheidet. Sämtliche der Figuren 5a bis 5c sind in Form einer Draufsicht zu verstehen. Das Ausführungsbeispiel zeigt, wie ein Filterelement 7' innerhalb einer Vorrichtung 1 platziert wird. Gemäß der Figur 5 erfolgt dies mittels eines Einschiebens des Filterelements 7' von einer Seite der Vorrichtung 1 aus. Wie aus der Skizze direkt deutlich wird, würde ein L-Profil 31 an einer einer Öffnung 37 der Vorrichtung 1 zugewandten Seite des Spannrahmens 14 einen skizzenhaft dargestellten Einschiebevorgang behindern. Daher ist in diesem zweiten Ausführungsbeispiel lediglich ein festes L-Profil 31 lediglich an einer der

Öffnung 37 der Vorrichtung 1 abgewandten Seite des Spannrahmens 14 vorgesehen, wie es analog am ersten Ausführungsbeispiel beispielsweise aus der Figur 1 erkennbar ist. Auf der der Öffnung 37 zugewandten Seite des Spannrahmens 14 ist nun vielmehr eine um eine Drehachse 38 drehbare Kralle 39 angeordnet. Diese Kralle 39 ist nach einem vollständigen Einführen des Filterelements 7' in die Vorrichtung 1 schließlich um besagte Drehachse 38 drehbar, so dass sie ähnlich zum L-Profil 31 auf der anderen Seite des Spannrahmens 14 angeordnet ist und im Falle einer Bewegung des Spannrahmens 14 in eine von dem Hohlprofil 12 abgewandten Richtung in ein Randprofil 40 des Filterelements 7' einhakt und einen Formschluss mit diesem ausbildet. Der Zustand einer um die Drehachse 38 gedrehten Kralle 39 ist in Figur 5b dargestellt. Die Pfeile 2 markieren analog zum ersten Ausführungsbeispiel eine Strömungsrichtung der zu filternden Luft während des Filterbetriebs, während die Dichtung 20 - ebenfalls analog zum ersten Ausführungsbeispiel - dicht auf der Stützfläche 21 des Hohlprofils 12 sitzt und die Prüfrille 22 verschließt. Im Falle einer Desinfektion kann nun analog zu vorstehender Erläuterung der Spannrahmen 14 mittels des in den Figuren 5a bis 5c nicht dargestellten Spannorgans 13 in Strömungsrichtung verfahren werden, bis er schließlich mittels des L-Profils 31 und der gedrehten Kralle 39 an das Randprofil 40 des Filterelements 7' andockt und dies im Folgenden in Strömungsrichtung verschiebt. Infolgedessen hebt sich auch hier die Dichtung 20 von der Stützfläche 21 ab und gibt somit die Prüfrille 22 frei, so dass das Desinfektionsmittel effektiv und zielgerichtet aus dem Hohlprofil 12 heraus auf die Dichtung 20 aufgebracht werden kann. Letzterer Zustand des Verfahrens ist anhand von Pfeilen in Figur 5c graphisch verdeutlicht.

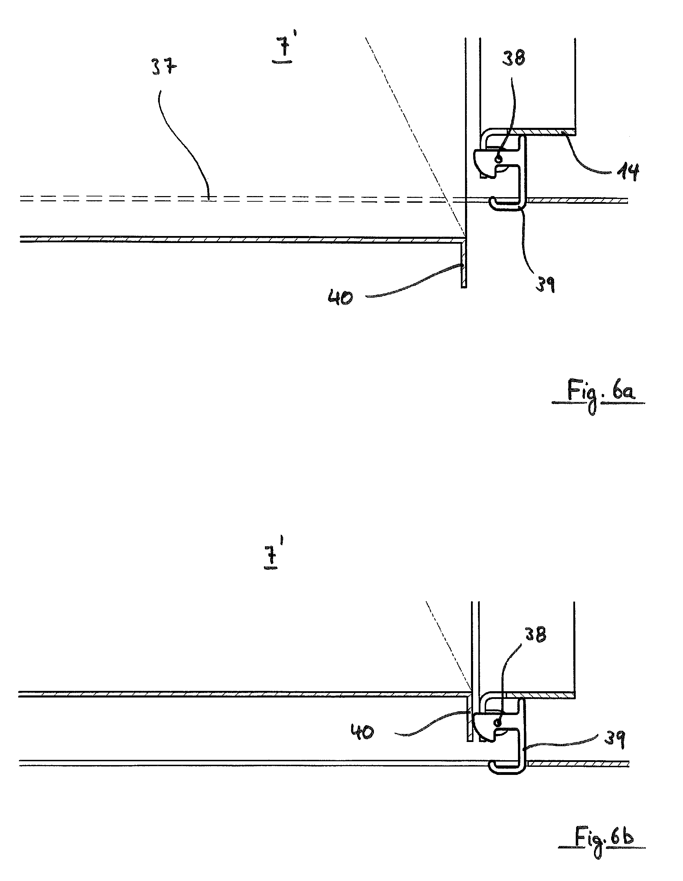

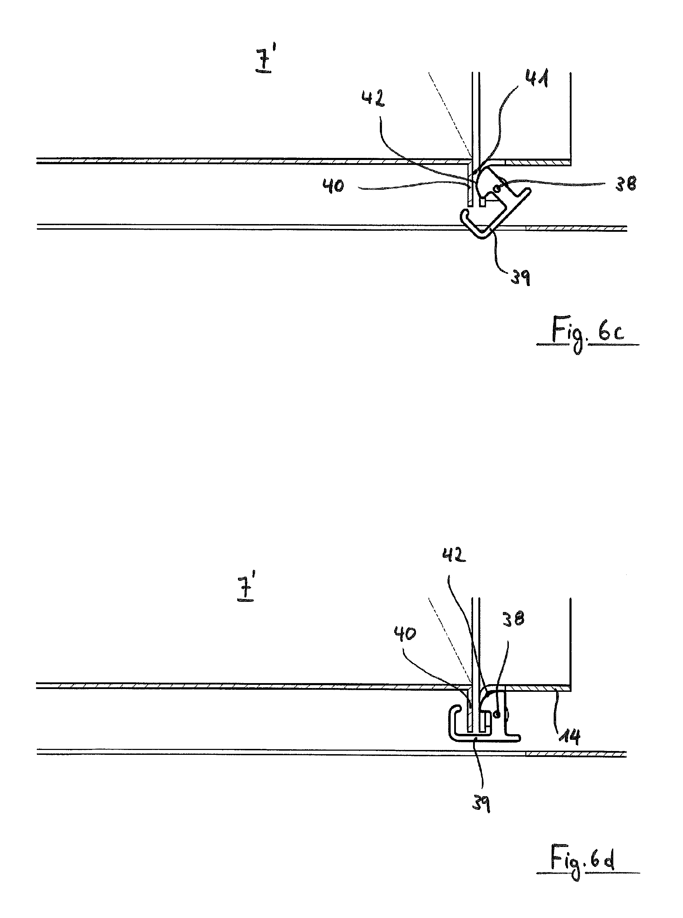

Anhand der Figuren 6a bis 6d ist nachfolgend detailliert gezeigt, auf welche Art und Weise die Kralle 39, die in den Figuren 5a bis 5c lediglich schematisch dargestellt ist, ausgebildet ist, so dass eine Drehung um die Drehachse 38 automatisch und ohne weiteres Zutun eines Anwenders abläuft und somit gleichermaßen unkompliziert und effektiv erfolgt. Zu diesem Zweck ist ein Vorgang des Einführens des Filterelements 7' in die Öffnung 37 der Vorrichtung 1 erneut in einzelnen Schritten abgebildet. Analog zu Figur 5a ist in Figur 6a dargestellt, wie das Filterelement 7' noch nicht abschließend in der Vorrichtung 1 platziert ist. Die Kralle 39 befindet sich entsprechend in einer Montagestellung, die dadurch gekennzeichnet ist, dass sie einen Einschiebeweg des Filterelements 7' nicht versperrt. In Figur 6b ist schließlich einer eingeführten Stellung des Filterelements 7' gezeigt, während die Kralle 39 weiterhin in der Montagestellung verbleibt. Um den Filterbetrieb der Vorrichtung 1 aufnehmen zu können, ist es chronologisch an Figur 6b anknüpfend entscheidend, dass das Filterelement 7' in eine Richtung parallel zur Strömungsrichtung der die Vorrichtung durchströmenden Luft auf das Hohlprofil 12 zugeschoben wird, so dass die Dichtung 20 dicht auf ihrer Stützfläche 21 sitzt und die Prüfrille 22 verschließt (vgl. Figur 1). Zu diesem Zweck wird der Spannrahmen 14 mittels dem in den Figuren 6a bis 6d nicht dargestellten Spannorgan 13 gegen den Elementrahmen **11** beziehungsweise im konkreten Fall gegen eine Kontaktfläche 41 des Randprofils 40 gedrückt und dadurch das Filterelement 7' strömungsparallel verschoben. Während dieses Anpressvorgangs des Filterelements 7' gegen das Hohlprofi 12 kommt unweigerlich eine rundlich ausgeformte Kontaktfläche 42 der Kralle 39 mit dem Rahmenprofil 40 des Filterelements 7' in Kontakt. Dieser Kontakt der Kontaktfläche 42 führt zu einer Kraft, die auf die Kralle 39 wirkt, wobei diese Kraft einen Hebelarm relativ zur Drehachse 38 aufweist. Aus dieser Konstellation resultiert ein Moment, welches sich in einer Verdrehung der Kralle 39 niederschlägt, wie anhand der Figur 6c graphisch verdeutlich ist. In Figur 6d ist die Kralle 39 schließlich in einer vollständig um die Drehachse 38 verdrehten Endstellung abgebildet. Eine Überführung der Kralle 39 von der Montagestellung gemäß Figur 6a hin zu der Endstellung gemäß Figur 6d erfolgt folglich vollständig automatisch im Zuge des Anpressens des Filterelements 7' inklusive dessen Dichtung 20 an das Hohlprofil 12. Im Fall einer Desinfektion der Vorrichtung 1 kann nun analog zum Ausführungsbeispiel gemäß Figur 1 der Spannrahmen 14 in Strömungsrichtung zurückbewegt werden, wobei der Spannrahmen 14 und das Randprofil 40 des Filterelements 7' formschlüssig ineinander eingreifen und die Dichtung 20 erfindungsgemäß von der Stützfläche 21 abgehoben wird.

### Bezugszeichenliste

- 1: Vorrichtung
- 2: Pfeil
- 3: Rohgaseinlass
- 4: Rohgasraum
- 5: Absperrklappe
- 6: Anschlusskanal
- 7, 7': Filterelement
- 8: Filtermedium
- 9: Anschlussstutzen
- 10: Blindstopfen
- 11: Elementrahmen
- 12: Hohlprofil
- 13: Spannorgan
- 14: Spannrahmen
- 15: C-Profil
- 16: Auflager
- 17: Federelement
- 18: Kontaktfläche
- 19: Stirnfläche
- 20: Dichtung
- 21: Stützfläche
- 22: Prüfrille
- 23: Reingasraum
- 24: Reingasauslass
- 25: Anschlusskanal
- 26: Absperrklappe
- 27: Speicher
- 28: Fördereinrichtung
- 29: Anschlussstutzen
- 30: Absaugstutzen
- 31: L-Profil
- 32: Druckzylinder
- 33: Kolben
- 34: Kolbenstange
- 35: Pfeil
- 36: Pfeil
- 37: Öffnung
- 38: Drehachse
- 39: Kralle
- 40: Randprofil
- 41: Kontaktfläche
- 42: Kontaktfläche

## Patentansprüche

1. Vorrichtung (1) zur Filtration eines mit Aerosolen beladenen Gasvolumenstroms, mit einem Filtergehäuse, das einen Rohgaseinlass (3) und einen Reingasauslass (24) aufweist und mit mindestens einem Filterelement (7) versehen ist, das einen Innenraum des Filtergehäuses in einen den Rohgaseinlass (3) aufweisenden Rohgasraum (4) und einen den Reingasauslass (24) aufweisenden Reingasraum (23) unterteilt, wobei ein Überströmen des Gasvolumenstroms von dem Rohgasraum (4) in den Reingasraum (23) lediglich durch ein in dem Filterelement (7) befindliches Filtermedium (8) hindurch möglich ist, wobei das Filterelement (7) einen Elementrahmen (11) besitzt, der einen Durchströmungsquerschnitt des Filterelements (7) umlaufend umgibt, wobei sich das Filterelement (7) mit einer ersten Stirnfläche (19) des Elementrahmens (11) unter Zwischenschaltung einer umlaufenden Dichtung (20) an einer senkrecht zu einer Durchströmungsrichtung ausgerichteten umlaufenden Stützfläche (21) des Filtergehäuses abstützt und an einer der ersten Stirnfläche (19) gegenüberliegenden zweiten Stirnfläche des Elementrahmens (11) mittels eines Spannrahmens (14) einer Spanneinrichtung gegen die Stützfläche (21) des Filtergehäuses pressbar ist, wobei die Stützfläche (21) des Filtergehäuses von einer Seitenfläche eines Hohlprofils (12) gebildet wird und die Seitenfläche eine umlaufende Prüfrille (22) aufweist, mittels derer eine Dichtigkeit der Dichtung (20) überprüfbar ist, wobei die Spanneinrichtung mindestens ein Spannorgan (13) zur Erzeugung einer Spannkraft aufweist, **gekennzeichnet durch** ein Abhebemittel, mittels dessen die Dichtung (20) aktiv von der Stützfläche (21) abhebbar ist.

2. Vorrichtung (1) nach Anspruch 1, **dadurch gekennzeichnet, dass** das Abhebemittel von dem Spannorgan (13) gebildet wird.

3. Vorrichtung (1) nach Anspruch 2, **dadurch gekennzeichnet, dass** der Eingriff mittels eines Formschlusses erfolgt.

4. Vorrichtung (1) nach einem der Ansprüche 1 bis 3, **dadurch gekennzeichnet, dass** der Spannrahmen (14) ein L-Profil (31) aufweist, welches mit dem Elementrahmen (11) in Eingriff bringbar ist.

5. Vorrichtung (1) nach einem der Ansprüche 1 bis 4, **dadurch gekennzeichnet, dass** der Elementrahmen (11) in jeweils an die Stirnflächen des Filterelements (7) angrenzenden Bereichen eine Form eines C-Profils (15) aufweist.

6. Vorrichtung (1) nach Anspruch 4 und 5, **dadurch gekennzeichnet, dass** die C-Profil (15) Bereiche des Elementrahmens (11) umlaufend ausgeführt sind, während das L-Profil (31) des Spannrahmens (14) an mindestens einer Seite, vorzugsweise an zwei Seiten des Elementrahmens (11) angeordnet ist.

7. Vorrichtung (1) nach einem der Ansprüche 1 bis 6, **dadurch gekennzeichnet, dass** das Spannorgan (13) in einem passiven Zustand mittels eines Federelements (17) in einer Schließstellung gehalten wird, in der das Filterelement (7) gegen die Stützfläche (21) des Filtergehäuses gepresst wird.

8. Verfahren zur Desinfektion einer Vorrichtung (1) zur Filtration eines mit Aerosolen beladenen Gasvolumenstroms, umfassend die folgenden Schritte:
a) Ein Desinfektionsmittel wird in einen Rohgausraum (4) eines Innenraums eines Filtergehäuses geleitet.
b) Das Desinfektionsmittel wird durch den Innenraum des Filtergehäuses geleitet, wobei das Filtergehäuse ein Filterelement (7) aufweist, das den Innenraum des Filtergehäuses in den einen Rohgaseinlass (3) aufweisenden Rohgasraum (4) und einen einen Reingasauslass (24) aufweisenden Reingasraum (23) unterteilt, so dass ein Überströmen des Desinfektionsmittels von dem Rohgasraum (4) in den Reingasraum (23) lediglich durch ein in dem Filterelement (7) befindliches Filtermedium (8) hindurch möglich ist, wobei das Filtermedium (8) mit dem Desinfektionsmittel in Kontakt gebracht wird, wobei das Filterelement (7) einen Elementrahmen (11) besitzt, der einen Durchströmungsquerschnitt umlaufend umgibt, wobei das Filterelement (7) während des Filterbetriebs mit einer ersten Stirnfläche (19) des Elementrahmens (11) unter Zwischenschaltung einer umlaufenden Dichtung (20) an einer senkrecht zu einer Durchströmungsrichtung ausgerichteten umlaufenden Stützfläche (21) des Filtergehäuses abstützbar ist und an einer der ersten Stirnfläche (19) gegenüberliegenden zweiten Stirnfläche des Elementrahmens (11) mittels eines Spannrahmens (14) einer Spanneinrichtung gegen die Stützfläche (21) des Filtergehäuses pressbar ist, wobei die Stützfläche (21) des Filtergehäuses von einer Seitenfläche eines Hohlprofils (12) gebildet ist und die Seitenfläche eine Prüfrille (22) aufweist, mittels derer während des Filterbetriebs eine Dichtigkeit der Dichtung (20) überprüfbar ist, wobei eine Spannkraft der Spanneinrichtung mittels mindestens eines Spannorgans (13) erzeugbar ist.
c) Das Desinfektionsmittel wird aus dem Innenraum des Filtergehäuses heraus geleitet.
d) Das Desinfektionsmittel wird außer in den Innenraum des Filtergehäuses auch in das Hohlprofil (12) geleitet und über die Prüfrille (22) in der Seitenfläche mit der Dichtung (20) in Kontakt gebracht,
**gekennzeichnet durch** den folgenden Verfahrensschritt:
e) Die Dichtung (20) wird aktiv von der Stützfläche (21) abgehoben.

9. Verfahren nach Anspruch 8, **dadurch gekennzeichnet, dass** die Dichtung (20) vor einer Einleitung des Desinfektionsmittels in das Hohlprofil (12) aktiv von der Stützfläche (21) abgehoben wird.
